Europäisches Patentamt

European Patent Office

Office européen des brevets

(19)

(11) Publication number: **0 048 612**
A2

(12)

# EUROPEAN PATENT APPLICATION

(21) Application number: **81304321.3**

(22) Date of filing: **21.09.81**

(51) Int. Cl.³: **C 08 L 5/14**
//(C08L5/14, 33/02)

(30) Priority: **22.09.80 CH 7090/80**

(43) Date of publication of application:
**31.03.82 Bulletin 82/13**

(84) Designated Contracting States:
**BE DE FR GB NL**

(71) Applicant: **MEYHALL CHEMICAL A.G.**
**P.O. Box 8280**
**Kreuzlingen(CH)**

(72) Inventor: **Wielinga, Willem C.**
**Hinterdorfstrasse 41**
**CH-8274 Taegerwilen(CH)**

(72) Inventor: **Schumacher, Guido**
**Weinstrasse 41**
**CH-8280 Kreuzlingen(CH)**

(74) Representative: **Votier, Sidney David et al,**
**CARPMAELS & RANSFORD 43, Bloomsbury Square**
**London WC1A 2RA(GB)**

(54) **Thickener and method for making same.**

(57) Highly effective thickeners are made by blending a polymeric polyacid with a moist alkaline natural gum or gum derivative. Such thickeners are particularly useful in the textile industry.

EP 0 048 612 A2

Croydon Printing Company Ltd.

## "THICKENER AND METHOD FOR MAKING SAME"

This invention relates to thickeners and to a method of making thickeners.

The numerous thickeners presently available in the trade, as used in large quantities in the textile industry, food industry, pharmaceutical industry and others, still have various shortcomings. Thus, products obtained from natural substances often require a high concentration to achieve thickening with the desired degree of rheology. Their stability, particularly in aqueous solution, leaves much to be desired. On the other hand, synthetic products, particularly those on the basis of synthetic polymeric polyacids, are often extremely difficult to handle, require neutralization before use, and are extremely sensitive to electrolytes.

The products obtained by the process of this invention have largely been able to avoid the above drawbacks and have resulted in creating a stable, free-flowing product that is readily soluble in water and has excellent properties when used as a thickener.

The new product has a matrix of a gum thickener, which may be a natural gum thickener, in which a salt of a polymeric polyacid (e.g. alkali, ammonium or amino salt) is distributed uniformly and joined mechanically and inseparably therewith.

The new products are prepared by mixing the gum, preferably in particulate form, with an aqueous alkaline solution, the amount of which is preferably sufficient to swell the gum and to be absorbed by the gum but not sufficient to dissolve the gum. If used initially in particulate form, the gum, although swelled, remains in its particulate form. The alkaline wet gum is then blended with a polymeric polyacid, the blend is dried and is ground to a powder.

In carrying out the process of this invention, the gum is preferably mixed with 20 to 50 weight percent water and 4 to 10 weight percent alkali, said weight percents being based on a total weight of gum, water and alkali. The amount of polymeric polyacid which is blended with the alkaline gum will usually be an amount equivalent to the alkali present in the gum to about twice the equivalency. This amount will vary from 25 to 45 weight percent polymeric polyacid to 75 to 55 weight percent alkaline gum.     The mixing and blending is preferably conducted at room temperature to 90°C. for a time sufficient to obtain thorough mixing and blending.

While it is still not clear what exactly takes place during the process, it is believed that the salt formed from the polymeric polyacid and alkali migrates into the matrix of the gum thickener which has been swelled by the aqueous alkali.

The resulting product, after being dried and ground, is soluble in water, can be processed in conventional equipment, shows a stronger thickening capacity than unmodified natural products and is therefore usable in smaller amounts.

Gum thickeners useful in this invention are polysaccharides and their derivatives which hydrate in hot or cold water to form viscous solutions or dispersions.    The gum thickeners are classified as natural gums and modified gums.     Natural gums include seaweed extracts, plant exudates, gums from seeds or roots, and gums obtained by microbial fermentation.     Modified gums include cellulose and starch derivatives as well as derivatives of the natural gums listed hereinbefore.

Useful gums include agar, algin, carrageenan, guar gum, gum arabic, gum ghatti, gum tragacanth, karaya gum, locust bean gum, pectin, xanthan gum and the like. Useful modified natural gums include depolymerized guar and locust bean gum, hydroxyalkyl guar, e.g. hydroxyethyl or hydroxypropyl guar, carboxymethyl guar, carboxymethyl locust bean gum, carboxymethyl-hydroxypropyl guar, cationic guar, e.g. reaction product of guar and 2,3-epoxypropyl-trimethyl-ammonium chloride, hydroxyethyl cellulose, hydroxypropyl cellulose, methyl cellulose, hydroxypropylmethyl cellulose and the like.

The modified natural gums are obtained by processes well known in the art. For instance, depolymerized galactomannan can be obtained by alkaline oxidation, by acid hydrolysis, by controlled enzymatic degradation or by thermal treatment. The hydroxyethyl derivatives can be obtained by treating the gum with an alkylene oxide under alkaline conditions. The alkyl and carboxymethyl derivatives are obtained by treating the gum with an alkyl halide or chloroacetic acid, including the sodium salt of monochloroacetic acid, respectively again under alkaline conditions.

Useful polymeric polyacids are homo and copolymers of acrylic acid, methacrylic acid, maleic anhydride, fumaric acid and the like. Preferred polymeric polyacids are in a dry powder form. Particularly useful polymeric polyacids are the polyacrylic acids copolymerized with a minor amount of a polyallyl ether of a polyol. Such polymeric polyacids are marketed under the trade mark "CARBOPOL" by B. F. Goodrich Company. These polymeric polyacids are described in U.S. Patent 2798053. Other useful polymeric polyacids are those obtained by copolymerizing maleic anhydride with ethylene or alkyl vinyl ethers such as those copolymers described in U.S. Patent 3436378. Other useful polymeric polyacids are described in U.S. Patent 4167502 and are copolymers of polymerizable unsaturated acids with minor amounts of allyl acrylate. These polymeric polyacids, particularly the "CARBOPOL" polyacids, are extremely hard to handle and to dissolve in water. Commercially such polyacids have been dispersed in organic liquids with surfactants and these dispersions have been added to water to form aqueous solutions. The polymeric polyacid content of such dispersions is low within the range of 15-20% which means that a high amount of organic liquid, e.g. mineral spirits, must be used. Such use of organic liquids is, of course, undesirable for environmental reasons.

The alkaline solutions useful in this invention are aqueous solutions of alkali metal hydroxides, i.e. sodium, potassium or lithium hydroxide. However, aqueous ammonium hydroxide and aqueous solutions of amines can also be used. Useful alkaline solutions have an alkaline content of 10 to 50 weight percent and preferably 15 to 25 weight percent. Any concentration of alkali in water can be used but, preferably, the amount of alkali and the amount of water, both based on the total weight of alkali, water and gum, falls within the limits of 4 to 10 weight percent alkali and 20 to 50 weight percent water.

In carrying out the process of this invention, the aqueous alkaline solution can be added to powdered gum or to the gum in larger particle size than a powder. For instance, when using guar gum, the aqueous alkaline solution can be added to the guar gum splits. After thorough mixing, the moist alkaline splits are ground into a powder and the polymeric polyacid is then blended into the gum matrix.

As stated hereinbefore, gums such as quar gum, can be depolymerized or derivatized under alkaline conditions. The alkaline depolymerized or derivatized product in powder form can be mixed with the polymeric polyacid with no need to neutralize or remove the alkaline reagent.

The weight percentages of gum to polymeric polyacid useful in this invention can, for example, vary from 75 percent to 55 percent gum to 25 to 45 percent acid. A particularly preferred ratio of components is 67 to 65 weight percent gum to 33 to 35 weight percent polymeric polyacid. The amount of polymeric polyacid is preferably an amount substantially equivalent (acid to base equivalency) to the alkali in the gum up to about twice the equivalency.

The alkaline wet gum and the polymeric polyacid are preferably mixed and blended together at room temperature up to a temperature of 90°C. A preferred upper temperature is 70°C. After thorough mixing, the blend is ground and dried, preferably to a moisture content of 6 to 9 weight percent.

The new thickeners can be used to advantage in the cosmetic industry, pharmaceutical industry and textile industry.    In the last-named industry, these thickeners give excellent results in pigment printing, polyester printing, cellulose printing with reactive dyes, and in carpet printing with acid dyes and chrome dyes, in the conventional printing, as well as in the so-called "Jet printing".    Better colour yields as well as more brilliant colorations are achieved, since the content in thickener of usually 5 to 10% can be reduced to 1 to 2%.

Because of their strong pseudoplasticity indicated by a high pseudo flow limit of

$$\text{Brookfield Yield Value} = \frac{\eta 0.5 \text{ rpm} - \eta 1 \text{ rpm}}{100}$$

expressed in dynes/cm$^2$ wherein $\eta$ is the apparent viscosity measured with a Brookfield viscosity at 0.5 and 1 rpm, the new products are suited quite generally as dispersants.

The following examples describe the invention in more detail.    Parts and percentages unless otherwise indicated are parts and percentages by weight.

EXAMPLE 1

400 to 470 parts of depolymerized guar, viscosity 10-15 mPas at 25°C., 1% concentration in water, Brookfield - 20 rpm, with an alkali content of 6 to 7% NaOH, depending on water content, which is in the range of 37 to 46%, and preferably 40%, are intimately mixed in a blender for a period of 30 minutes, at about 40 to 50°C., with 100 parts "CARBOPOL 820" (Polyacrylic acid with an approximate molecular weight of 1,000,000).

Following that, the blend is dried at 80°C. with hot air and ground to a fineness of finer than 80 mesh (Tyler mesh units).

The ground, dried product shows the following analytical data:

a) water content    :    5 to 7%
b) viscosity 1%    :    5000 to 7000 mPas
c) pH (1%)    :    about 6.5

The viscosity of the aqueous solutions is measured .

with an RVT Brookfield viscosimeter at 20 rpm, 25°C. after a hydration period of 1 hour.

EXAMPLE 2

Example 1 is repeated, with the difference that a polyacid of higher molecular weight, i.e. about 4,000,000 in form of "CARBOPOL 846", is used.

The end product shows, in 2% aqueous solution, a viscosity of 66,500 mPas.

EXAMPLE 3

450 parts depolymerized guar with an ammonia content of 5% and a water content of 40 to 44% are intimately mixed with 50 parts of a polyacid, and dried and ground at a temperature of 25 to 30°C.,as described in Example 1.

The following data of the end product are observed:

a)  water content        :   5 to 7%
b)  viscosity 1%         :   2500 to 3000 mPas
              2%         :   11,000 to 13,000 mPas
c)  pH (1%)              :   about 6.0

EXAMPLE 4

400 parts of purified, partially swelled, depolymerized CMHPG (carboxymethyl hydroxypropyl guar having a D.S. of about 0.1 and an M.S. of about 0.4 with a viscosity of 100-200 mPas at 1% concentration in water) with an NaOH content of about 7% and a water content of 35 to 37% are intimately mixed with 100 parts "CARBOPOL 820" for 30 minutes at 50 to 55°C.  Following that, the mixture is dried at 80°C. with hot air and ground finer than M80 (Tyler).

The end product has the following analytical data:

a)  water content     :   5 to 7%
b)  viscosity 1%      :   1500 to 2000 mPas
c)  pH (1%)           :   about 6.0

EXAMPLE 5

400 parts depolymerized HPG (hydroxypropyl guar having an M.S. of about 0.4) with an NaOH content of about 7% and a water content of 35 to 38% are intimately mixed with 100 parts "CARBOPOL 820" at 50 to 60°C., during 20 to 30 minutes, dried at a temperature of 80°C., and ground to a fineness of finer than M80.

The following data are determined:

a) water content : 5 to 7%

b) viscosity 1% : 4500 to 5000 mPas

c) pH (1%) : about 6.0

EXAMPLE 6

340 parts CMHPG (1% ~ 3500 mPas) with an NaOH content of 8% and a water content of 25 to 30% are reacted at room temperature with 100 parts "CARBOPOL 820" in a blender for a period of 30 minutes. Following that, the product is dried and ground, as above.

The following data of the product are obtained:

a) $H_2O$ content : 5 to 7%

b) viscosity 1% : 6000 to 7000 mPas

c) pH (1%) : almost neutral

EXAMPLE 7

400 parts HPG (with a viscosity of 3500 to 4000 mPas at a 1% concentration) with an NaOH content of about 7% and a water content of 36 to 40% are intimately mixed with 100 parts "CARBOPOL 820" for 30 minutes at 40°C., then dried at 80°C. and ground finer than M80.

The following data of the product are obtained:

a) $H_2O$ content : 5 to 8%

b) viscosity 1% : 13,000 to 15,000 mPas

c) pH (1%) : 5 to 6

EXAMPLE 8

Example 7 is repeated, but as matrix-polysaccharide, a carboxymethylated guar product (with a viscosity of 3000 to 3500 mPas, D.S. 0.7, at 1% concentration) instead of the HPG is used. The product gives the following data:

a) $H_2O$ content : 6 to 9%

b) viscosity 1% : 3500 to 5000 mPas

c) pH (1%) : about 6.0

EXAMPLE 9

Example 7 is repeated, but as matrix, a water-soluble CMC (carboxymethyl cellulose, Hercules Cellulose Gum CMC 7 HOF, having a D.S. of 0.65-0.85, a sodium content of 7.0 to 8.5% and a viscosity of about 2000 mPas at 1% concentration in water) is used. Reaction took place at 20 to 25°C.

The end product shows the following properties:

a) H$_2$O content     :     6 to 8%

b) viscosity 1%     :     2500 to 3000 mPas

c) pH (1%)     :     6 to 7

EXAMPLE 10

400 parts carboxymethylated locust bean gum having a D.S. of 0.08 and a viscosity of about 300 mPas at 1% concentration in water with a water content of 45 to 50% and an NaOH content of about 6% are intimately blended with 100 parts "CARBOPOL 820" at a temperature of 50 to 60°C. and for a period of 30 minutes.

The water soluble product shows after drying and grinding the following data:

a) H$_2$O content     :     6 to 8%

b) viscosity 1%     :     800 mPas

3%     :     8000 to 8500 mPas

c) pH (1%)     :     6

EXAMPLE 11

400 to 470 parts depolymerized guar with an alkali content of 6 to 7%, depending on water content, which should be in the range of 37 to 46%, and preferably 40 to 42%, are intimately mixed at about 40 to 50°C. with 120 parts alginic acid for a period of 30 minutes in a conventional mixer.

Following that, the mixture is ground to a fineness of less than mesh 80 (Tyler mesh units) and dried to about 8% with hot air of 80°C.

The ground, dried product shows the following analytical data:

a) water content     :     7 to 9%

b) viscosity 4%     :     2800 mPas

c) pH (4%)     :     6 to 8

The viscosity is determined as described in Example 1.

For greater clarity, the Examples 1 through 10 were compiled in the following Table I.

The electrolyte sensitivity of the salts of the polyacids was checked with a 10% common salt solution and the results given in Table II through IV.    Electrolyte
stability was expressed in percent of the residual
viscosity with addition of the corresponding amount of
salt.    The products were all prepared in accordance with
the above examples.

## TABLE I

| Process Conditions | Example No. 1 | 2 | 3 | 4 | 5 |
|---|---|---|---|---|---|
| | Depol. guar | Depol. guar | Depol. guar | Depol. CMHPG | Depol. HPG |
| 1) Matrix Material (g) | 400-470 | 400-470 | 450 | 400 | 400 |
| 1.1. Water Content % | 36-46 | 37-46 | 40-44 | 35-37 | 35-38 |
| 1.2. NaOH Content % | 6-7 | 6-7 | --- | 7 | 7 |
| 1.3. $NH_3$ Content % | --- | --- | 5 | --- | --- |
| 2) Polyacid Amount (g) | | | | | |
| 2.1 Mol.Wt. $1.0X10^6$ | 100 | --- | 50 | 100 | 100 |
| 2.2 Mol.Wt. $4.0X10^6$ | --- | 100 | --- | --- | --- |
| 3) Mixing Temperature °C. | 40-50 | 40-50 | 25-30 | 50-55 | 50-60 |
| 4) Reaction Time, Min. | 30 | 30 | 30 | 30 | 30 |
| 5) Drying 80°C./Grinding | + | + | + | + | + |
| Properties: | | | | | |
| a) $H_2O$ Content | 5-7 | 5-7 | 5-7 | 5-7 | 5-7 |
| b) Viscosity, mPas 1% | 6000 | --- | 3000 | 1750 | 4750 |
| 2% | --- | 66,500 | 12,000 | --- | --- |
| 3% | --- | --- | --- | --- | --- |
| c) pH (1%) | 6.5 | 6.5 | 6.0 | 6.0 | 6.0 |

0048612

0048612

### TABLE I (continued)

| Process Conditions | Example No. | | | | |
|---|---|---|---|---|---|
| | 6 | 7 | 8 | 9 | 10 |
| | CMHPG | HPG | CMG | CMC | CMLBG |
| 1) Matrix Material (g) | 340 | 400 | 400 | 400 | 450 |
| 1.1. Water Content % | 25-30 | 36-40 | 36-40 | 36-40 | 45-50 |
| 1.2. NaOH Content % | 8 | 7 | 7 | 7 | 6 |
| 1.3. $NH_3$ Content % | --- | --- | --- | --- | --- |
| 2) Polyacid Amount (g) | | | | | |
| 2.1 Mol.Wt. $1.0 \times 10^6$ | 100 | 100 | 100 | 100 | 100 |
| 2.2 Mol.Wt. $4.0 \times 10^6$ | --- | --- | --- | --- | --- |
| 3) Mixing Temperature °C. | 25 | 40 | 40 | 20-25 | 55 |
| 4) Reaction Time, Min. | 30 | 30 | 30 | 30 | 30 |
| 5) Drying 80°C./Grinding | + | + | + | + | + |
| Properties: | | | | | |
| a) $H_2O$ Content | 5-7 | 5-8 | 6-9 | 6-8 | 6-8 |
| b) Viscosity, mPas 1% | 6500 | 14,000 | 4250 | 2750 | 800 |
| 2% | --- | --- | --- | 18,000 | --- |
| 3% | --- | --- | --- | --- | 8250 |
| c) pH (1%) | 6.0 | 5-6 | 6 | 6-7 | 6-7 |

TABLE II

Composition of Product (Weight Percent)

| Type Synthetic Polymer and Matrix Polymer Product No. | IV | VI | VII | VIII | IX | X | Mol.Wt. |
|---|---|---|---|---|---|---|---|
| Polymeric Polyacid | | | | | | | |
| Sodium Salt | -- | -- | 44 | -- | -- | -- | $4 \times 10^6$ |
| Ammonium Salt | -- | -- | -- | -- | -- | -- | $4 \times 10^6$ |
| Sodium Salt | 34 | 44 | -- | 27 | 33 | 34 | $1 \times 10^6$ |
| Depolymerized Guar | 66 | 56 | 56 | 73 | -- | -- | |
| Depolymerized Guar | -- | -- | -- | -- | -- | 66 | |
| Hydroxypropyl Guar (HPG) | -- | -- | -- | -- | 67 | -- | |
| Depolymerized HPG | -- | -- | -- | -- | -- | -- | |
| Carboxymethyl-HPG (CMHPG) | -- | -- | -- | -- | -- | -- | |
| Carboxymethyl Guar (CMG) | -- | -- | -- | -- | -- | -- | |
| Depolymerized Cationic Guar | -- | -- | -- | -- | -- | -- | |
| Sodium Alginate | -- | -- | -- | -- | -- | -- | |
| "White Spirit" | -- | -- | -- | -- | -- | -- | |

-12-

0048612

## TABLE II (continued)

### Composition of Product (Weight Percent)

| Type Synthetic Polymer and Matrix Polymer / Product No. | XI | XII | XII | XIII | XIV | XV | Mol.Wt. |
|---|---|---|---|---|---|---|---|
| **Polymeric Polyacid** | | | | | | | |
| Sodium Salt | -- | -- | -- | -- | -- | 34 | $4 \times 10^6$ |
| Ammonium Salt | -- | -- | -- | -- | 31 | -- | $4 \times 10^6$ |
| Sodium Salt | 34 | 32 | 32 | 33 | -- | -- | $1 \times 10^6$ |
| **Depolymerized Guar** | -- | -- | -- | -- | -- | -- | |
| Depolymerized Guar | -- | -- | -- | -- | -- | -- | |
| **Hydroxypropyl Guar (HPG)** | -- | -- | -- | -- | -- | -- | |
| Depolymerized HPG | -- | -- | -- | -- | -- | 66 | |
| Carboxymethyl-HPG (CMHPG) | 66 | -- | -- | -- | -- | -- | |
| **Carboxymethyl Guar (CMG)** | -- | 68 | 68 | -- | -- | -- | |
| **Depolymerized Cationic Guar** | -- | -- | -- | 67 | -- | -- | |
| **Sodium Alginate** | -- | -- | -- | -- | 64 | -- | |
| "White Spirit" | -- | -- | -- | -- | 5 | -- | |

0048612

| Product No. | IV | VI | VII | VIII | IX | X |
|---|---|---|---|---|---|---|
| 1% Viscosity, Pas, 20 rpm | 6.9 | 3.6 | 102 | 6.2 | 14.3 | 9.9 |
| Concentrated Synthetic Polymer % | 0.34 | 0.44 | 0.44 | 0.27 | 0.33 | 0.34 |
| Concentrated Matrix Polymer % | 0.66 | 0.56 | 0.56 | 0.73 | 0.67 | 0.66 |
| Electrolyte Stability: Residual Viscosity in % g NaCl 10%/kg paste | | | | | | |
| 1 | 88 | 92 | 88 | 87 | 92 | 92 |
| 2 | 81 | 85 | 67 | 74 | 86 | 83 |
| 10 | 37 | 44 | 9 | 31 | 58 | 51 |
| 100 | 1 | 1 | 1 | 1 | 14 | 3 |

-14-

0048612

## TABLE II (continued)

| Product No. | XI | XII | XII | XIII | XIV | XV |
|---|---|---|---|---|---|---|
| .1% Viscosity, Pas, 20 rpm | 6.5 | 3.7 | 3.8 | 4.8 | 1.8 | 13.9 |
| Concentrated Synthetic Polymer % | 0.34 | 0.32 | 0.32 | 0.33 | 0.31 | 0.34 |
| Concentrated Matrix Polymer % | 0.66 | 0.68 | 0.68 | 0.67 | 0.64 | 0.66 |
| Electrolyte Stability: Residual Viscosity in % | | | | | | |
| g NaCl  10%/kg paste | | | | | | |
| 1 | 96 | 99 | 93 | 73 | 96 | 69 |
| 2 | 93 | 97 | 88 | 66 | 91 | 44 |
| 10 | 79 | 84 | 73 | 52 | 61 | 5 |
| 100 | 29 | 32 | 25 | 1 | 18 | 1 |

0048612

## TABLE III

| Type Synthetic Polymer and Matrix Polymer | Composition of Product (Weight Percent) | | | | |
|---|---|---|---|---|---|
| Product No. | XVI | XVII | XVIII | XIX | Mol.Wt. |
| Polymeric Polyacid | | | | | |
| Sodium Salt | 34 | -- | -- | -- | $4 \times 10^6$ |
| Ammonium Salt | -- | 34 | 33 | 34 | $1 \times 10^6$ |
| Sodium Salt | -- | -- | -- | -- | $5 \times 10^5$ |
| Depolymerized Guar | 66 | -- | -- | 66 | |
| Depolymerized CMHPG | -- | 66 | -- | -- | |
| CMC | -- | -- | 67 | -- | |
| Sodium Alginate | -- | -- | -- | -- | |
| Viscosity, Pas, 20 rpm | 66.5 | 3.2 | 18.0 | 38.0 | |
| Concentration Weight Percent | 2 | 2 | 2 | 3 | |
| Concentration S.P. Percent | 0.68 | 0.68 | 0.66 | 1.02 | |
| Concentration M.P. Percent | 1.32 | 1.32 | 1.34 | 1.98 | |
| Electrolyte Stability: | | | | | |
| Residual Viscosity in Percent | | | | | |
| g NaCl 10%/kg paste | | | | | |
| 1 | 89 | 96 | 92 | 89 | |
| 2 | 82 | 93 | 83 | 84 | |
| 10 | 38 | 68 | 78 | 69 | |
| 100 | 1 | 9 | 53 | 14 | |

## TABLE III (continued)

| Type Synthetic Polymer and Matrix Polymer | Composition of Product (Weight Percent) | | | |
|---|---|---|---|---|
| Product No. | XX | XXI | XXII | Mol.Wt. |
| Polymeric Polyacid | | | | |
|   Sodium Salt | -- | -- | -- | $4 \times 10^6$ |
|   Ammonium Salt | 33 | 31 | -- | $1 \times 10^6$ |
|   Sodium Salt | -- | -- | 34 | $5 \times 10^5$ |
| Depolymerized Guar | -- | -- | 66 | |
| Depolymerized CMHPG | 67 | -- | -- | |
| CMC | -- | -- | -- | |
| Sodium Alginate | -- | 69 | -- | |
| Viscosity, Pas, 20 rpm | 11.4 | 6.1 | 3.2 | |
| Concentration Weight Percent | 3 | 3 | 4 | |
| Concentration S.P. Percent | 0.99 | 0.93 | 1.36 | |
| Concentration M.P. Percent | 2.01 | 2.07 | 2.64 | |
| Electrolyte Stability: | | | | |
| Residual Viscosity in Percent | | | | |
|   g NaCl 10%/kg paste | | | | |
|     1 | 99 | 98 | 99 | |
|     2 | 97 | 96 | 97 | |
|     10 | 84 | 91 | 82 | |
|     100 | 32 | 67 | 28 | |

## TABLE IV

| Type Synthetic Polymer Alone | Mol. Wt. | Composition of Product (Weight Percent) | | | |
|---|---|---|---|---|---|
| Product No. | | I | II | III | Mol.Wt. |
| Polymeric Polyacid | | | | | |
| Ammonium Salt* | HMW | 100 | --- | --- | $4 \times 10^6$ |
| Sodium Salt** | MMW | --- | 100 | 100 | $1 \times 10^6$ |
| Concentration (Weight Percent) | | 0.7 | 0.5 | 1.0 | |
| Viscosity, 20 rpm, 25°C., Pas | | 42.7 | 4.3 | 5.7 | |
| Electrolyte Stability: | | | | | |
| Residual Viscosity in Percent | | | | | |
| g NaCl 10%/kg paste | | | | | |
| 1 | | 92 | 94 | 102 | |
| 2 | | 80 | 89 | 98 | |
| 10 | | 39 | 59 | 84 | |
| 100 | | 1 | 3 | 26 | |

\* CARBOPOL 846      \*\* CARBOPOL 820

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the spirit of the invention.

CLAIMS:

1. A process for preparing a thickener which comprises:
   a) mixing a gum with an aqueous alkaline solution;
   b) blending the alkaline wet gum with a polymeric polyacid;
   c) drying the blend; and
   d) grinding it to a powder.

2. The process of claim 1 wherein the gum is mixed with 20 to 50 weight percent water and 4 to 10 weight percent alkali, said weight percents being based on total weight of gum, water and alkali.

3. The process of claim 1 or claim 2 wherein the amount of water is 37 to 46 weight percent.

4. The process of any of claims 1, 2 and 3 wherein the weight percent gum is 55 to 75 percent and the weight percent polyacid is 45 to 25 percent.

5. The process of claim 4 wherein the weight percent gum is 65 to 67 percent and the weight percent polyacid is 35 to 33 percent.

6. The process of any preceding claim wherein the gum is a galactomannan gum.

7. The process of claim 6 wherein the galactomannan gum is guar gum.

8. The process of claim 7 wherein the guar gum is depolymerized guar gum.

9. The process of claim 7 wherein the guar gum is hydroxypropyl guar gum.

10. The process of claim 7 wherein the guar gum is carboxymethyl guar gum.

11. The process of any of claims 7 to 10 wherein the guar gum is in the form of splits when treated with the aqueous alkali and wherein the aqueous alkaline guar splits are ground to a powder prior to blending with the polymeric polyacid.

12. The process of any preceding claim wherein the polymeric polyacid is polyacrylic acid.

13. The process of any preceding claim wherein the mixing and blending are conducted at a temperature from

0048612

room temperature to 90°C.

14.    A thickener comprising a matrix of a gum in which a salt of a polymeric polyacid is distributed uniformly and joined mechanically and inseparably therewith.